## Europäisches Patentamt
## European Patent Office
## Office européen des brevets

(19)

(11) Numéro de publication: **0 204 143**
**B1**

(12)

# FASCICULE DE BREVET EUROPÉEN

(45) Date de publication du fascicule du brevet:
**02.06.89**

(51) Int. Cl.⁴: **G 01 N 29/04**

(21) Numéro de dépôt: **86105868.3**

(22) Date de dépôt: **29.04.86**

(54) **Procédé de détection par ultrasons des défauts internes d'un rail de chemin de fer situés dans les bords du champignon de ce rail et dispositif pour sa mise en oeuvre.**

(30) Priorité: **15.05.85 CH 2087/85**

(43) Date de publication de la demande:
**10.12.86 Bulletin 86/50**

(45) Mention de la délivrance du brevet:
**02.06.89 Bulletin 89/31**

(84) Etats contractants désignés:
**AT BE CH DE FR GB IT LI NL SE**

(56) Documents cité:
**WO-A-82/03920**
**US-A-4 174 636**

(73) Titulaire: **MATIX INDUSTRIES (Société Anonyme), 59, rue Saint- Lazare, F-75009 Paris (FR)**

(72) Inventeur: **Turbe, Jean- Pierre, 26, rue Fernand Collot, F-77100 Nanteuil Les Meaux (FR)**

(74) Mandataire: **Micheli, Michel- Pierre, MICHELI & CIE 118, Rue du Rhône Case Postale 47, CH- 1211 Genève 6 (CH)**

LIBER, STOCKHOLM 1989

## Description

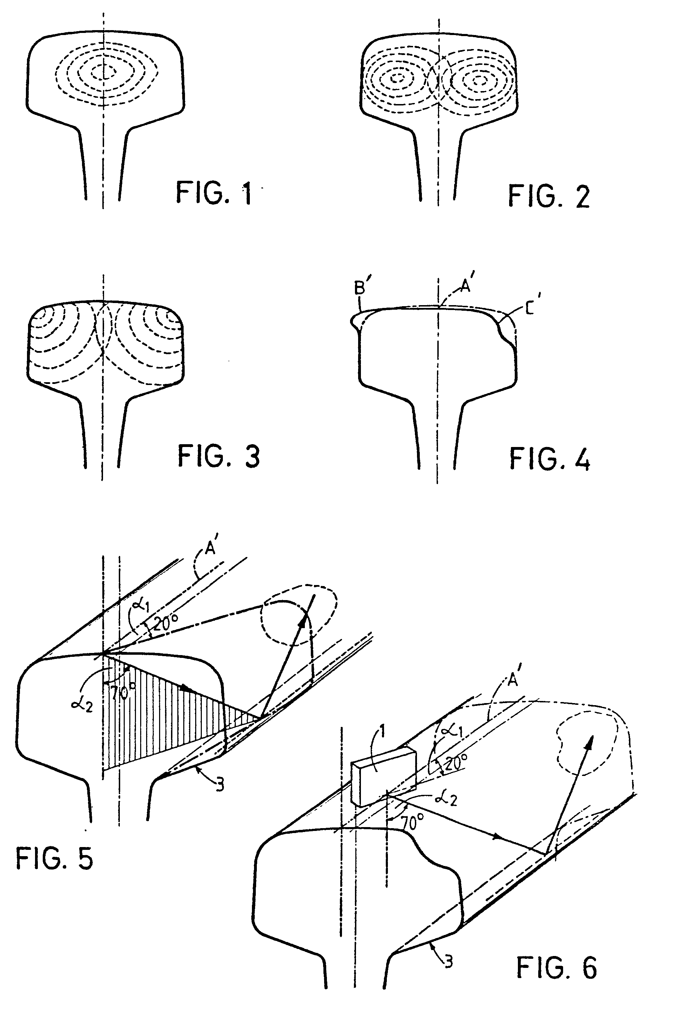

Les fissurations transversales d'origine métallurgique situées dans le champignon du rail se développent en général dans l'axe médian de celui-ci (figure 1). Ces fissures bien connues sont appelées taches ovales.

A l'origine de ces défauts, un noyau non homogène dû à la fabrication peut, par la suite, donner naissance à une petite fissure qui ensuite se propage et s'agrandit.

Le rail sollicité par le passage des trains subit d'énormes contraintes qui ont pour effet l'accroissement de ces fissures qui peut aller jusqu'à 100 % de la section du rail, mais les ruptures des rails, à la section de ces fissures, peuvent déjà avoir lieu pour des fissures de valeur parfois faible (20 %) suivant les circonstances (voie, traffic).

Leur détection est effectuée par la technique des ultrasons. Un faisceau ultrasonore d'angle réfracté dans l'acier de 70° est dirigé vers le coeur du champignon à partir d'une sonde placée sur la table de roulement du rail. L'énergie réfléchie par la fissure est détectée puis mesurée par des circuits électroniques.

L'opérateur peut alors prendre les mesures nécessaires en fonction de l'importance des fissures détectées. Il peut placer le rail incriminé sous surveillance pour les petites fissures ou demander son remplacement pour les grosses fissures.

Depuis plusieurs années apparaissent des fissures transversales ayant des origines décalées à droite et à gauche de la partie médiane du champignon (figure 2) de part et d'autre de son axe de symétrie.

D'autres fissurations transversales prennent naissance à partir des coins supérieurs gauche et droit du champignon (figure 3).

L'origine de ces fissures décalées peut être attribuée au type de rail lui-même, à la charge par essieu des trains et à l'évolution des aciers utilisés pour la fabrication des rails.

Dans certains pays, la configuration de la figure 2 est prépondérante et dans d'autres pays c'est celle de la figure 3 qui est la plus répandue.

Dans tous ces cas se pose le problème de la détection des taches ovales décalées.

Actuellement la détection de ces taches ovales décalées (figures 2 et 3) ne peut pas se faire avec précision et certitude. En effet, en utilisant les procédés actuels, développés pour la détection de taches ovales centrées (figure 1) on n'est jamais sûr du résultat, s'agit-il pour un écho donné, de l'écho réfléchi par une tache ovale centrée, d'une certaine ampleur, ou de l'écho provenant d'une ou plusieurs taches ovales décalées, d'une ampleur différente? Cette ambiguïté dans la mesure ne peut pas être levée avec les moyens actuellement à disposition et conduit à un risque élevé de ruptures ou au remplacement prématuré des rails si l'on ne veut pas courir de risques.

En outre, comme on le voit sur la figure 4 la surface du champignon du rail est déformée dans les bords par l'usure provoquée par le roulement des trains. De ce fait, il n'est pas possible d'utiliser des sondes émettrices d'ultrasons qui prendraient appui sur les bords B, C du champignon du rail pour tenter de détecter les taches ovales décalées, le contact avec le rail ne pouvant pas en ces endroits être assuré convenablement, la précision de la mesure serait insuffisante du fait que l'on n'obtiendrait pas un bon contact acoustique de par les formes de la sonde et du rail et de ce fait la trajectoire du faisceau d'ultrasons dans le rail ne serait pas connue avec précision.

On connaît des documents No WO-A-82/03920 et US-A-4 174 636 des procédés et dispositifs de détection par ultrasons de fissures dans des rails de chemin de fer dans lesquels des sondes émettrices et réceptrices sont montées dans des roues roulant sur le rail à ausculter. Du fait que la position des sondes se modifie continuellement au cours du processus d'auscultation du rail, l'interprétation des échos reçus est très problématique.

La présente invention a pour but de permettre la mesure des taches ovales décalées à l'aide d'ultrasons en utilisant une ou plusieurs sondes émettrices/réceptrices prenant appui sur la partie médiane A' de la surface de roulement du champignon du rail qui elle n'est que peu déformée et avec une géométrie constante de la position des sondes par rapport au rail. Ce n'est en effet que de cette façon qu'il est possible d'assurer un bon contact acoustique entre la sonde et le rail et donc de connaître le cheminement et le positionnement des faisceaux émis dans le rail et de pouvoir réaliser une interprétation cohérente des échos reçus.

Le procédé de détection par ultrasons des fissures décalées du champignon d'un rail de chemin de fer se distingue par les caractéristiques énumérées à la revendication 1.

La présente invention a encore pour objet un dispositif pour la mise en oeuvre du procédé tel que revendiqué à la revendication 7.

Le dessin annexé illustre schématiquement et à titre d'exemple le principe de fonctionnement du procédé de détection suivant l'invention et deux formes d'exécution d'un dispositif pour sa mise en oeuvre.

Les figures 5, 6, 7 et 8 illustrent schématiquement le principe du procédé de détection, l'emplacment des sondes, la direction et le cheminement du faisceau ultrasonore par rapport au rail.

La figure 9a, b, c, d illustre à titre d'exemple quatre cas de réflexion possibles d'un faisceau ultrasonore.

La figure 10 illustre une première forme d'éxécution d'un dispositif pour la mise en oeuvre du procédé de détection.

Les figures 11, 12 et 13 illustrent une seconde forme d'exécution du dispositif de détection selon l'invention.

Le procédé défini tient compte de plusieurs paramètres inhérents à la forme du champignon du rail. Le champignon comporte sur sa partie supérieure et aux congés des courbes naturelles conçues pour permettre une bonne adaptation du couple roue-rail.

De plus, cette table de roulement s'use en fonction du nombre de millions de tonnes qu'elle supporte de par le passage des trains.

La figure 4 montre un rail qui, à sa droite, a subi une usure due au frottement des roues et de leur boudin. Cette situation se rencontre souvent dans certaines courbes de la voie ferrée.

Cette même figure 4 montre un rail qui, à sa gauche, a subi un aplatissement de la table de roulement.

Toutes ces raisons ont conduit à ne pas choisir les parties latérales B', C' gauche et droite de la table de roulement pour transmettre les faisceaux ultrasonores.

Les figures 5 à 8 montrent le positionnement et les directions des faisceaux ultrasonores utilisés.

L'énergie ultrasonore est transmise depuis deux sondes distinctes. Un faisceau est dirigé de gauche à droite dans le champignon et l'autre est dirigé de droite à gauche à partir de la partie médiane A' de la table de roulement.

L'angle formé entre l'axe longitudinal médian du champignon, abscisse et le faisceau est de l'ordre de $\alpha_1 = 20°$.

L'angle formé entre l'axe vertical médian du rail, ordonnée et le faisceau est de l'ordre de $\alpha_2 = 70°$.

Ces angles sont déterminés notamment en fonction de l'inclinaison de la portée d'éclisse pour obtenir une bonne réflexion et une propagation du faisceau dans un plan sensiblement parallèle au plan de symétrie du rail.

Compte tenu de la divergence du faisceau dans l'acier:

$$\sin \alpha \text{ div.} = \frac{1.2\lambda}{D}$$

$$\text{où } \lambda = \frac{c}{f} = \frac{3230 \text{ m/s}}{3 \text{ mhz}}$$

$$\text{et } D = 16 \text{ mm}$$

$$\alpha \neq 5° \text{ où}$$

div = divergent
$\lambda$ = longeur d'onde
D = diamètre du faisceau

Cette divergence du faisceau existe sur toutes les faces du faisceau celui-ci devient cônique.

La réflexion de ces faisceaux côniques sur les portées d'éclisse inclinées crée des faisceaux larges qui "arrosent" toute la partie droite et respectivement gauche du champignon du rail.

Les fissures transversales renvoient les énergies reçues directement ou indirectement après réflexion sur les fissures, la table de roulement, la partie latérale du champignon, ou les portées d'éclisses.

Ce procédé de détection permet donc de positionner des sondes émettrices-réceptrices 1, 2 d'ultrasons en prenant appui sur la partie médiane de la table de roulement du champignon du rail, pour émettre des faisceaux ultrasonores dans le rail formant en projection sur un plan parallèle à l'axe longitudinal du rail et tangent à la surface de roulement un angle $\alpha_1$ compris entre 10° et 25° avec l'axe longitudinal du champignon du rail et en projection sur un plan perpendiculaire à l'axe longitudinal du rail un angle $\alpha_2$ compris entre 60° et 80° avec l'axe vertical du rail. Ce faisant ces faisceaux, devenus côniques par leur divergence dans l'acier, sont réfléchis par la portée d'éclisse correspondante 3, 4 et "arrosent" tout le volume des parties gauche respectivement droite du champignon du rail permettant ainsi la détection des taches ovales décalées.

Les deux sondes émettrices-réceptrices 1, 2 sont généralement montées dans un même support glissant sur la surface de roulement du rail, support qui est déplacé le long du rail afin d'ausculter toute la longueur de celui-ci. Il est évident qu'une troisième sonde peut être montée dans ce support, émettant un faisceau ultrasonore central dans le plan de l'axe longitudinal du champignon pour détecter simultanément les taches ovales centrées (figure 1).

Les distances parcourues par ces ondes ultrasonores sont assez importantes (300 mm. aller et retour) et dépendent de la hauteur du champignon.

Les énergies reçues en retour par les traducteurs sont amplifiées et analysées.

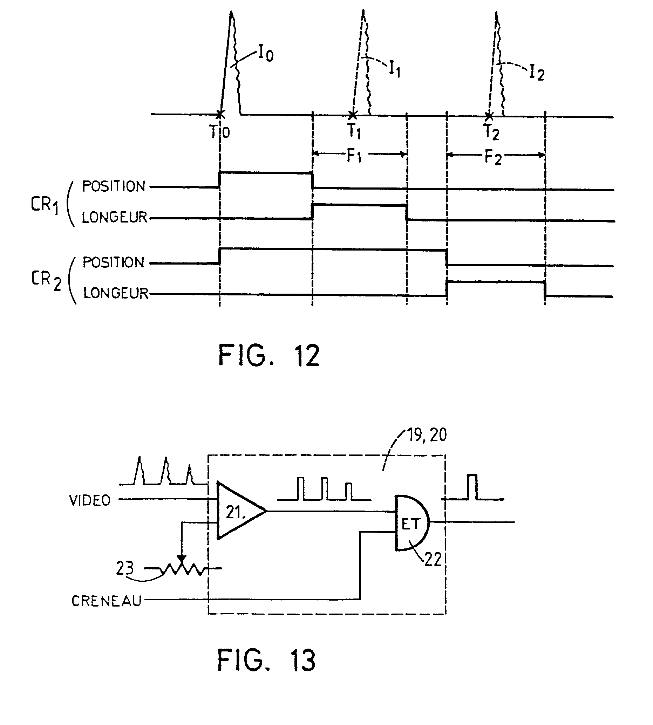

L'énergie émise au temps To (figure 12) est transmise dans l'acier du champignon se dirigeant vers la partie droite respectivement gauche de la section du champignon et vient "rebondir" sur la portée d'éclisse. S'il y a fissure, une énergi est réfléchie en retour et parcourt le chemin inverse. L'onde parcourt ce chemin à la vitesse de 3230 mètres/seconde. Lorsque la sonde se déplace et que la fissure se trouve dans l'espace où s'effectue le rebond de l'onde, il y a, compte tenu de la divergence du faisceau, une réflexion directe ou-indirecte qui apparaîtra sur l'oscillogramme aux temps $T_1$ ou $T_2$.

Des circuits électroniques détectent les énergies aux temps $T_1$ et $T_2$.

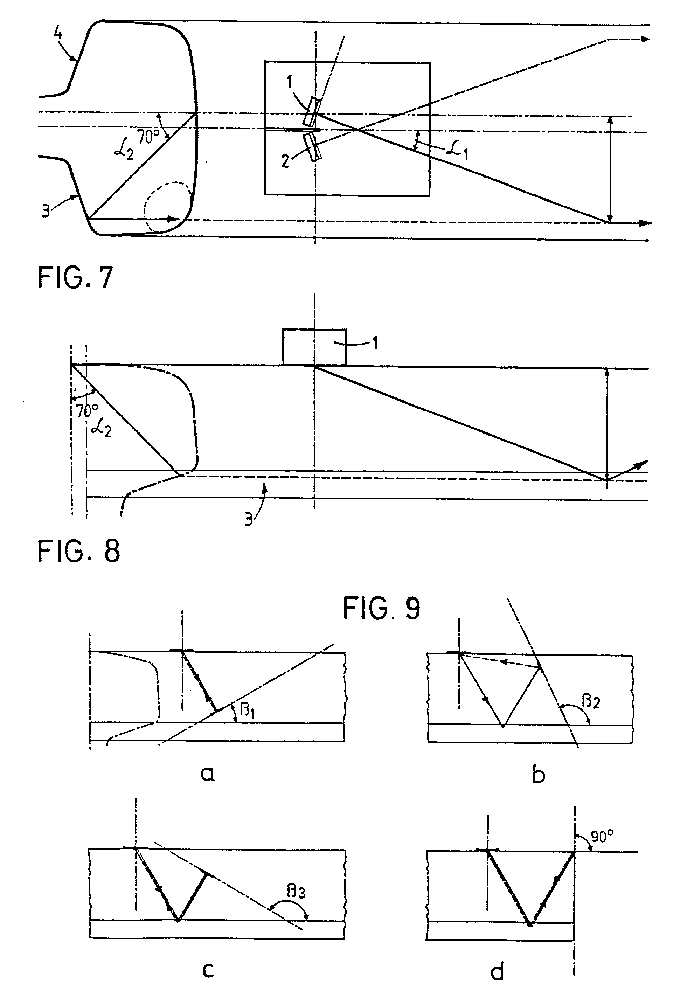

La figure 9a illustre le cas d'une tache ovale décalée inclinée d'un angle (20 à 30°) par rapport à un plan parallèle à la table de roulement provoquant une réflexion directe du faisceau incident avant qu'il ait atteint la portée d'éclisse.

La figure 9b illustre le cas d'une tache ovale décalée inclinée d'un angle $\beta_2$ (110° à 130°) par rapport à un plan parallèle à la table de roulement du rail, provoquant une réflexion indirecte du faisceau incident après que celui-ci ait rebondi sur la portée d'éclisse.

La figure 9c illustre le cas d'une tache ovale décalée inclinée d'un angle $\beta_3$ (150 à 160°) par rapport à un plan parallèle à la table de roulement du rail, provoquant une réflexion indirecte du faisceau incident après son rebond sur la portée d'éclisse. Ici le faisceau réfléchi rebondit également sur la portée d'éclisse sur son chemin de retour.

Enfin, la figure 9d illustre le cas d'un about de rail incliné à 90° par rapport à un plan parallèle à la table de roulement du rail provoquant une réflexion indirecte du faisceau incident après son rebond sur la portée d'éclisse. Cette réflexion est créée par le "coins" haut formé par le plan de roulement et l'about de rail.

Dans chacun des cas décrits ci-dessus, le chemin aller-retour parcouru par le faisceau d'ondes ultrasonores présente une longueur différente de sorte qu'il est possible en mesurant l'intervalle de temps séparant l'émission de l'impulsion ultrasonore de la réception d'un écho de savoir quel type de fissure, position et inclinaison de celle-ci, a été mis en évidence.

En pratique on créera électroniquement une fenêtre $F_1$ pendant laquelle les échos obtenus par les configurations des figures 9a et 9b seront reçus, et une seconde fenêtre $F_2$ (figure 12) pendant laquelle les échos, obtenus par les configurations des figures 9c et 9d seront reçus. En dehors de ces intervalles de temps $F_1$, $F_2$ les échos ne seront pas pris en considération.

Ce procédé permet donc à l'aide de sondes ultrasonores guidées sur la surface de roulement du champignon du rail non seulement de détecter les taches ovales décalées, c'est-à-dire situées dans les bords du champignon du rail, mais encore de déterminer, leur nature et comme on le verra par la suite de les différencier par rapport aux abouts de rails.

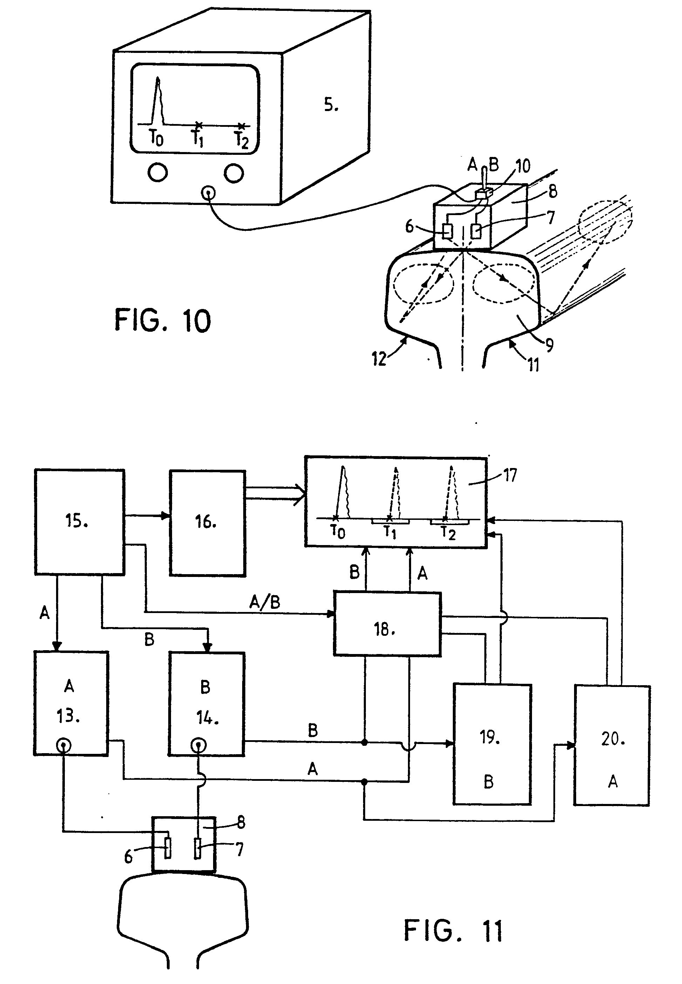

La figure 10 illustre une première forme d'exécution d'un dispositif de sondage manuel pour la mise en oeuvre du procédé de détection décrit. Ce dispositif comporte un appareillage standard à ultrasons à une voie transmission-réception muni d'un affichage cathodique. La partie électronique 5 délivre des signaux à deux sondes émettrices-réceptrices d'ultrasons 6, 7 montées dans un support 8. Ce support 8 comporte une surface de contact destinée à être posée sur la table de roulement du champignon 9 du rail de telle sorte que les sondes soient en contact sonique avec le rail. Lorsque le support est en position de service posé sur la table de roulement du rail les sondes 6, 7 sont disposées de part et d'autre du plan de symétrie longitudinal du champignon 9 du rail et orientées de telle façon que le faisceau d'ultrasons émis par la sonde 6, située à gauche dudit plan médian, arrose la partie droite du champignon 9 et que le faisceau d'ultrasons émis par la sonde 7, située à droite dudit plan médian, arrose la partie gauche du champignon du rail. Ces faisceaux incidents sont dirigés dans le rail suivant les angles $\alpha_1$ et $\alpha_2$ comme décrit plus haut, rebondissant sur les portées d'éclisse 11, 12 et donnant naissance à des échos lorsqu'ils rencontrent des taches ovales décalées.

Les deux sondes 6, 7 sont alimentées simultanément par les signaux de la partie électronique et émettent donc simultanément des faisceaux incidents discontinus d'ultrasons dans le rail. Un commutateur 10 permet de déconnecter la sonde 6 ou la sonde 7.

Le support 8 est déplacé linéairement le long de la table de roulement du rail à une vitesse déterminée de telle sorte que, compte tenu de la fréquence de répétition des émissions des impulsions ultrasonores, une auscultation à 100 % du rail ait lieu.

Si une impulsion est émise au temps To les sondes peuvent recevoir des échos aux temps $T_1$ ou $T_2$ suivant que la réflexion sur une tache ovale est directe ou indirecte. Lorsqu'on reçoit un écho, l'utilisateur immobilise le support et isole la sonde 6 ou la sonde 7 à l'aide de l'inverseur 10. De cette façon il est possible de savoir si l'écho est provoqué par la réflexion du faisceau émis par la sonde 6 ou la sonde 7 et ainsi il est possible de déterminer de quel côté du champignon du rail se trouve le défaut provoquant l'écho. Si l'écho est perçu en même temps et avec la même énergie quelle que soit la sonde en service cela veut dire que l'on détecte un about de rail ou une tache ovale de très forte importance qui couvrirait presque toute la surface du champignon. L'opérateur peut très facilement, visuellement faire la différence entre un about de rail et un défaut interne au champignon.

Dans une telle exécution, la réalisation de l'appareillage électronique ainsi que celle des sondes est conventionnelle. Ce qui est important est la disposition géométrique des sondes 6, 7 dans le support pour que lorsque celui-ci est en position de service appliqué contre la surface de roulement du rail les faisceaux ultrasonores incidents soient émis dans le rail suivant les angles $\alpha_1$ et $\alpha_2$ décrits plus haut et que chacun de ces faisceaux incidents intersecte le plan médian du rail.

Dans une variante il est évident que les sondes 6, 7 peuvent être alimentées alternativement de sorte que l'on peut attribuer les échos reçus, en fonction de l'intervalle de temps les séparant d'une émission, à l'une ou l'autre sonde et ainsi savoir de quel côté du plan médian du rail se situe la défectuosité.

Lorsque l'on veut ausculter systématiquement de grandes longueurs de rail, il faut disposer d'un appareillage automatique monté par exemple sur une automotrice de mesure se déplaçant le long du tronçon de voie à ausculter. La figure 11 illustre schématiquement un tel dispositif de détection automatique.

Cette installation automatique de détection par ultrasons comporte un boîtier ou support 8 à l'instar de la forme d'exécution précédemment décrite, monté sur un chariot tracté ou sur un bogie d'une automotrice, renfermant les deux sondes 6, 7 émettrices-réceptrices orientées par rapport au rail de la même façon que précédemment décrit.

La sonde 6 est reliée à un émetteur-récepteur 13 tandis que la sonde 7 est reliée à un émetteur-récepteur 14. Ces deux émetteurs-récepteurs 13, 14 sont pilotés par un commutateur de phase 15 de telle sorte que lorsque le canal A est en mode émission, le canal B ne soit pas commandé et vice-versa. Ainsi dans cet exemple, les sondes 6, 7 travaillent alternativement.

Le commutateur de phase 15 est encore relié à une base de temps 16 commandant le balayage des abscisses d'un dispositif d'affichage 17 constitué soit par un enregistreur soit par un écran cathodique vidéo. Ce commutateur de phase 15 pilote également un inverseur 18 recevant les signaux de réception des deux canaux A et B, puisqu'il est relié aux émetteurs-récepteurs 13, 14 et délivre le signal afférant à l'un de ces canaux A respectivement B au dispositif d'affichage. Cet inverseur est commandé par le commutateur de phase 15 de telle manière que ce soit toujours le signal de réception de la sonde activée qui soit délivré à l'affichage 17.

Enfin, ce dispositif comporte encore deux sélecteurs de temps de réception 19, 20 permettant d'afficher sur le dispositif d'affichage 17 les "fenêtres" $F_1$, $F_2$ correspondant aux laps de temps pendant lesquels, pour une sonde donnée, les échos directs respectivement indirects peuvent être reçus. La figure 12 illustre une impulsion émise lo au temps To qui, si un défaut est détecté, donne suivant le mode de propagation (figures 9a, b ou 9c, d) des ultrasons dans le rail, naissance à un écho $I_1$ respectivement $I_22$ aux temps $T_1$ respectivement $T_2$. Pour éviter tout écho parasite, le dispositif de mesure est inhibé en dehors des fenêtres $F_1$, $F_2$ ou laps de temps, pendant lesquels ces échos sont attendus.

La figure 13 illustre un schéma d'un tel sélecteur 19, 20 comportant un amplificateur 21 recevant les signaux provoqués par les échos et un signal de mise en forme 23. Cet amplificateur élimine les signaux d'amplitude inférieure à un seuil déterminé et transforme les impulsions reçues en impulsions rectangulaires. Ces impulsions rectangulaires sont délivrées à un circuit ET 22 dont l'autre entrée reçoit un signal déterminant la position et la durée du créneau de passage ($F_1$ ou $F_2$). Sur la sortie de ce circuit ET, correspondant à la sortie du sélecteur 19 respectivement 20 ne restent que les impulsions correspondant à des échos reçus pendant les intervalles de temps $F_1$ respectivement $F_2$. Ces intervalles de temps $F_1$, $F_2$ sont déterminés en fonction des dimensions du champignon du rail.

Avec une telle installation de détection, en choisissant la fréquence de répétition des impulsions émises et la vitesse de déplacement du support 8 le long du rail de telle sorte qu'une impulsion soit émise tous les 4 mm., les faisceaux d'ultrasons ayant un diamètre d'environ 16 mm., on réalise les conditions idéales pour effectuer un contrôle du rail à 100 %.

Il est à noter que les différents éléments et composants électroniques utilisés sont bien connus mais qu'ici également l'originalité réside dans la disposition particulière des sondes 6, 7 qui permet la détection des taches ovales décalées tout en prenant appui sur la table de roulement du rail.

Il est évident que dans des variantes non illustrées le support du boîtier pourrait renfermer une troisième sonde émettrice-réceptrice d'ultrasons dont le faisceau est dirigé parallèlement à l'axe longitudinal du rail pour détecter simultanément les taches centrées.

**Revendications**

1. Procédé de détection par ultrasons des fissures décalées de part et d'autre de la partie médiane du champignon d'un rail de chemin de fer, caractérisé par le fait que, avec au moins une sonde émettrice et réceptrice (6, 7), on fait pénétrer un faisceau d'ultrasons dans le rail à partir de la surface de la table de roulement du rail suivant une direction formant en projection sur un plan parallèle à l'axe longitudinal du rail et tangent à la surface de roulement un angle ($\alpha_1$) compris entre 10° et 25° avec l'axe longitudinal (A') du rail et en projection sur un plan perpendiculaire à l'axe longitudinal du rail un angle ($\alpha_2$) avec le plan de symétrie du rail compris entre 60 et 80°; puis capte les échos ou faisceaux réfléchis soit directement soit indirectement par une tache ovale décalée; et par le fait qu'on ne prend en compte la réception des échos que si elle a lieu pendant des laps de temps déterminés, correspondant pour chaque fissure, aux laps de temps pendant lesquels un écho peut être attendu compte tenu des modes de réception directs ou indirects.

2. Procédé selon la revendication 1, caractérisé par le fait que le faisceau émis est divergent de sorte qu'après réflexion sur la portée d'éclisse inclinée (3) du rail, il arrose toute une zone du rail comprise entre une partie de la surface externe de ce rail, flanc, congé et une partie de la table de roulement et un plan vertical passant par l'axe longitudinal (A') du rail alors que le faisceau émis pénètre dans le rail par la surface de la table de roulement de celui-ci à partir d'une position située de l'autre côté du plan longitudinal du rail.

3. Procédé selon la revendication 1 ou la revendication 2, caractérisé par le fait qu'on fait pénétrer dans le rail un second faisceau d'ultrasons disposé symétriquement au premier par rapport au plan de symétrie longitudinal du rail.

4. Procédé selon la revendication 3, caractérisé par le fait que les deux faisceaux sont émis simultanément et que pour localiser la position d'une fissure détectée on interrompt alternativement l'émission de l'un et de l'autre des faisceaux d'ultrasons.

5. Procédé selon la revendication 3, caractérisé par le fait qu'on émet alternativement les premier et second faisceaux d'ultrasons et que les échos captés sont affectés, en fonction du moment de leur réception, à l'un ou l'autre desdits faisceaux permettant ainsi de localiser la fissure.

6. Procédé selon l'une des revendications précédentes, caractérisé par le fait qu'on déplace le point d'émission des faisceaux d'ultrasons le long du rail à ausculter.

7. Dispositif de détection ultrasonique de taches ovales dans le champignon (9) d'un rail, taches ovales décalées par rapport à la partie médiane de ce champigon du rail, comportant au moins une sonde émettrice et réceptrice (6, 7) d'ultrasons couplée à un dispositif d'alimentation de la sonde et de réception (13, 14) et d'affichage (17) des échos réfléchis; caractérisé par le fait que cette sonde (6, 7) est guidée le long de la surface de roulement du rail et mise en contact sonore avec celui-ci, que la position de cette sonde (6, 7) est telle qu'elle émette un faisceau ultrasonore dans le rail suivant une direction formant en projection sur un plan parallèle à l'axe longitudinal du rail et tangent à la surface de roulement un angle ($\alpha_1$) avec l'axe longitudinal du rail compris entre 10° et 25° et en projection sur un plan perpendiculaire à l'axe longitudinal du rail un angle ($\alpha_2$] avec le plan de symétrie du rail compris en 60 et 80°; puis capte les échos ou faisceaux réfléchis directement ou indirectement par une tache ovale décalée, et par le fait qu'il comporte pour chaque sonde (6, 7) un sélecteur d'intervalles de temps (19, 20) affichant sur le dispositif d'affichage (17) des fenêtres (F1, F2) correspondant aux laps de temps pendant lesquels les échos directs respectivement indirects des faisceaux émis par chaque sonde peuvent être reçus.

8. Dispositif selon la revendication 7, caractérisé par le fait qu'il comporte une seconde sonde (7) émettant un faisceau ultrasonore symétrique au premier par rapport au plan de symêtrie longitudinal du rail.

9. Dispositif selon l'une des revendications 7 et 8, caractérisé par le fait que les sondes (6, 7) sont décalées latéralement par rapport au plan de symétrie longitudinal du rail (9).

10. Dispositif selon l'une des revendications 7 à 9, caractérisé par le fait qu'il est monté sur une automotrice en vue de son déplacement continu le long d'un rail (9).

**Patentansprüche**

1. Verfahren zum Feststellen von beiderseits vom Mittelabschnitt des Schienenkopfes von Eisenbahnschienen versetzten Rissen mittels Ultraschall, dadurch gekennzeichnet, daß man mit mindestens einer Sende- und Empfangssonde (6, 7) ein Ultraschallbündel in die Schiene ausgehend von der Oberfläche der Rollfläche der Schiene entlang einer Richtung eindringen läßt, die in Projektion auf einer zur Längsachse der Schiene parallele Ebene, die die Rollfläche berührt, einen Winkel ($\alpha_1$) zwischen 10 und 25° mit der Längsachse (A') der Schiene bildet und in Projektion auf eine zur Längsachse der Schiene senkrechte Ebene einen Winkel ($\alpha_2$) mit der Symmetrieebene der Schiene zwischen 60 und 80° bildet, daß anschließend die Echos der reflektierten Bündel entweder direkt oder indirekt mittels eines ovalen versetzten Fleckes erfaßt werden; und daß das Aufnehmen der Echos nur dann durchgeführt wird, wenn dieses während eines entsprechenden vorgegebenen Zeitintervalls erfolgt, das für jeden Riß dem Zeitintervall entspricht, während dessen unter Berücksichtigung der direkten oder indirekten Erfassungsweise ein Echo erwartet werden kann.

2. Verfahren nach Anspruch 1, dadurch gekennzeichnet, daß das emittierte Bündel divergent ist, sodaß es nach Reflexion an der geneigten Laschenkammer (3) der Schiene einen ganzen Schienenbereich bestrahlt, der zwischen einem äußeren Oberflächenbereich dieser Schiene, der Flanke, der Hohlkehle und einem Abschnitt der Rollfläche der Schiene und zwischen einer senkrechten Ebene liegt, die durch die Längsachse (A') der Schiene verläuft, während das emittierte Bündel durch die Oberfläche der Rollfläche in die Schiene ausgehend von einer Position eindringt, die auf der anderen Seite der Längsebene der Schiene liegt.

3. Verfahren nach Anspruch 1 oder 2, dadurch gekennzeichnet, daß man ein zweites Ultraschallbündel in die Schiene eindringen läßt, das symmetrisch zum ersten Bündel in bezug auf die Längssymmetrieebene der Schiene angeordnet ist.

4. Verfahren nach Anspruch 3, dadurch gekennzeichnet, daß die beiden Bündel gleichzeitig emittiert werden und daß zur Ortung der Lage eines erfaßten Risses abwechselnd die Emission des einen und des anderen Ultraschallbündels unterbrochen wird.

5. Verfahren nach Anspruch 3, dadurch gekennzeichnet, daß abwechselnd die ersten und zweiten Ultraschallbündel emittiert werden und daß die erfaßten Echos in Abhängigkeit vom Zeitpunkt ihres Empfanges dem einen oder anderen Strahlenbündel zugeordnet werden, wodurch die Ortung des Risses ermöglicht wird.

6. Verfahren nach einem der vorhergehenden Ansprüche, dadurch gekennzeichnet, daß der Emissionspunkt des Ultraschallbündels entlang der zu untersuchenden Schiene verschoben wird.

7. Vorrichtung zum Erfassen ovaler Flecke in Schienenkopf (9) einer Schiene mittels Ultraschall, welche ovale Flecken in bezug auf den Mittelabschnitt dieses Schienenkopfes versetzt sind, umfassend wenigstens eine Ultraschall-Sende- und Empfangssonde (6, 7), die mit einer Speisevorrichtung zur Versorgung der Sonde und zum Empfang (13, 14) und zum Anzeigen (17) der reflektierten Echos gekoppelt ist; dadurch gekennzeichnet, daß diese Sonde (6, 7) entlang der Rollfläche der Schiene geführt und mit dieser in Schallkontakt gebracht wird, daß die Lage dieser Sonde (6, 7) derart ist, daß sie ein Ultraschallbündel in die Schieneentlang einer Richtung emittiert, die in Projektion auf eine parallel zur Längsachse der Schiene gelegene Ebene, die die Rollfläche berührt, einen Winkel ($\alpha_1$) mit der Längsachse der Schiene zwischen 10 und 25° bildet und in Projektion auf eine zur Längsachse der Schiene senkrechte Ebene einen Winkel ($\alpha_2$) mit der Symmetrieebene der Schiene von 60 bis 80° bildet; daß die Echos oder reflektierten Bündel direkt oder indirekt durch einen versetzten ovalen Fleck erfaßt werden und daß sie für jede Sonde (6, 7) eine Wahleinrichtung (19, 20) für Zeitintervalle aufweist, die auf der Anzeigevorrichtung (17) Fenster (F1, F2) anzeigt, die den Zeiträumen entsprechen, während denen die direkten oder indirekten Echos der von jeder Sonde emittierten Strahlenbündel empfangen werden können.

8. Vorrichtung nach Anspruch 7, dadurch gekennzeichnet, daß sie eine zweite Sonde (7) aufweist, die ein bezüglich der Längssymmetrieebene der Schiene symmetrisches Ultraschallbündel emittiert.

9. Vorrichtung nach einem der Ansprüche 7 und 8, dadurch gekennzeichnet, daß die Sonden (6, 7) seitlich in bezug auf die Längssymmetrieebene der Schiene (9) versetzt sind.

10. Vorrichtung nach einem der Ansprüche 7 bis 9, dadurch gekennzeichnet, daß sie auf einem Motorfahrzeug zur Bewegung entlang einer Scheine (9) angeordnet ist.

**Claims**

1. Ultrasonic method for the detection of cracks displaced on an either side of the medium portion of the head of a railroad rail, characterized by the fact that, with at least one emmiter-receiver transducer (6, 7) one penetrates with an ultrasonic beam the rail from the rolling surface of the rail head along a direction forming in projection onto a plan parallel to the longitudinal axis of the rail and tangent to the rolling surface an angle $\alpha_1$ comprised between 10° and 25° with the longitudinal axis (A') of the rail and in projection onto a plan perpendicular to the longitudinal axis of the rail an angle $\alpha_2$ with the symmetic plan of the rail comprised between 60° and 80°; than detect the echos or beams reflected directly or indirectly by a displaced oval flaw; and by the fact that the reception of the echos is taken into account only if it takes place during determined time interval corresponding, for each crack, to the time interval is during which an echo can be awaited for taking into account for the indirect or direct reception modes.

2. Method according to claim 1, characterized by the fact that the emitted beam is diverging so that after reflection onto the fishing plate (3) which is inclined of the rail it sprays a whole area of the rail comprised between a portion of the external surface of this rail, one side and a portion of the rolling table of the rail and a vertical plan passing through the longitudinal axis (A') of the rail whereas the emitted beam penetrates into the rail through the rolling surface of the rail from a position located on the other side of the longitudinal plan of the rail.

3. Method according to claim 1 or claim 2, characterized by the fact that a second beam of ultrasounds is penetrating the rail which is disposed symmetrically to the first one with respect to a longitudinal symmetry plan of the rail.

4. Method according to claim 3, characterized by the fact that the two beams are emitted simultaneously and that to determine the position of a detected crack on interrupt alternatively the emission of the one and of the other of said ultrasonic beams.

5. Method according to claim 3, characterized by the fact that one emits alternatively the first and second ultrasonic beams and that the detected echos are associated, in function of their time of reception, to one or the other of the said beams permitting thus to define the location of the crack.

6. Method according to one of the preceeding claims, characterized by the fact that one displaces the emission point of the ultrasonic beams along the rail to be checked.

7. Ultrasonic detection device of the displaced oval flaws in the head of the rail, oval flows which are displaced with respect to the medium portion of the rail, comprising at least one emitter-receiver transducer (6, 7) of ultrasounds coupled to a feeding device of the transducer and for receiving (13, 14) and displaying (17) the reflected echos characterized by the fact that this transducer (6, 7) is guided along the surface of the rolling table of the rail and put in sonor contact with it, that the position of said transducer (6, 7) is such that it emits an ultrasonic beam within the rail along a direction forming in projection onto a plan parallel to the longitudinal axis of the rail and tangent to the rolling surface an angle $\alpha_1$ with the longitudinal axis of the rail comprised between 10° and 25° and in projection onto a plan perpendicular to the longitudinal axis of the rail an angle $\alpha_2$ with the symmetry plan of the rail comprised between 60° and 80°; and detects than the echos or beams reflected directly or indirectly by a displaced oval flaw, and by the fact that it comprises for each transducer (6, 7) a time intervall selector (19, 20) displaying on the display device (17) windows (F1, F2) corresponding to the time intervalls during which the direct respectively the indirect echos of the beams emitter through each transducer can be received.

8. Device according to claim 7, characterized by the fact that it comprises a second transducer (7), emitting an ultrasonic beam symmetrical to the first one with respect to the longitudinal symmetry plan of the rail.

9. Device according to one of the claims 7 and 8, characterized by the fact that the transducers (6, 7) are laterally displaced with respect to the longitudinal symmetry plan of the rail (9).

10. Device according to one of the claims 7 to 9, characterized by the fact that it is mounted on a railroad vehicle for its continuous displacement along a rail (9).

FIG. 1

FIG. 2

FIG. 3

FIG. 4

FIG. 5

FIG. 6

FIG. 7

FIG. 8

FIG. 9

a

b

c

d

FIG. 10

FIG. 11

5

FIG. 12

FIG. 13